# EUROPEAN PATENT APPLICATION

(11) **EP 2 592 447 A1**
(43) Date of publication of application: **15.05.2013**
(21) Application number: 11188242.9
(22) Date of filing: 08.11.2011
(51) Int. Cl.: G01W 1/06, F03D 11/00

(54) **Frost condition detection system and method**

(71) Applicant: Topwind Consultancy B.V., 3774 PE Kootwijkerbroek (NL)
(72) Inventor: Kerkhof, Ruud, 3771 NG Barneveld (NL)
(74) Representative: Ketelaars, Maarten F.J.M.

(57) **Abstract**

Method for detecting frost conditions at a monitoring site, such as a wind turbine location, and a frost condition detection system, with a sensor module (2) for determining a plurality of weather parameters, and a processing unit (3) connected to the sensor module. The frost condition detection system further comprising a camera (4) for providing local visual monitoring.

The method entails determining a plurality of weather parameters locally at the monitoring site, the plurality of weather parameters comprising at least air temperature, relative humidity and dew-point temperature, determining critical threshold values of each of the weather parameters for one or more possible phases of frost conditions, sending a warning message comprising an indication of the determined phase of possible frost conditions, and allowing remote visual monitoring.

## Description

### Field of the invention

The present invention relates to a frost condition detection system and method, especially applicable for use in monitoring of a wind turbine. Frost conditions are relevant for the formation of radiation frost (white frost, hoar frost or rime), i.e. tiny solid deposition of water vapor from saturated air which occurs when the temperature of the surfaces is below freezing point.

### Prior art

German utility model publication DE-U-20 2006 015047 discloses an ice warning system for wind power systems. A data logger is connected to a sensor module, an anemometer and a control system of the wind power system. Data from the sensor module (air temperature, relative humidity, and heated probe body) is used with wind velocity data from the anemometer, and rotor speed data from the control system to determine whether icing conditions prevail. Depending on conditions, the wind power system is controller, i.e. stopped and automatically restarted.

European patent publication EP-A-1 936 184 discloses an ice detection method and system, based on anemometry. The system determines which one of two conditions exist, a condition in which icing may occur, and a condition in which icing may not occur. The system uses two different types of anemometers and a calibration procedure. In this document icing is defined as conditions in which ice accrues on surfaces of a wind turbine, specifically the rotor blades.

### Summary of the invention

The present invention seeks to provide an improved method and system allowing reliable and timely warning of the occurrence of frost conditions.

According to the present invention, a method for detecting frost conditions at a monitoring site, such as a wind turbine, is provided, comprising determining a plurality of weather parameters locally at the monitoring site, the plurality of weather parameters comprising at least air temperature, relative humidity and dew-point temperature, determining critical threshold values of each of the weather parameters for one or more possible phases of frost conditions, sending a warning message comprising an indication of the determined phase of possible frost conditions, and allowing remote visual monitoring. This method allows to conveniently determine the actual situation and circumstances at the monitoring site, and assess whether or not a frost condition occurs which requires action.

In an embodiment, the method further comprises determining re-entry in a non-frost condition, and upon such determination sending a further message comprising an indication of the non-frost condition. Thus, when a frost condition has occurred, the event of entering the non-frost condition also initiates a message, again allowing to take appropriate action.

The warning message comprises a trigger link in a further embodiment, and the method further comprises controlling a camera (and optionally a lamp) which is mounted at the monitoring site to allow the visual monitoring, upon reception of an actuation of the trigger link. Thus, an actual visual inspection is possible after receiving a message that a frost condition situation has been entered.

In an even further embodiment, the method further comprises shutting down a device at the monitoring site (e.g. a wind turbine) in response to entering a specific one of the one or more possible phases of frost conditions. This prevents any possibility of ice build-up at the monitoring site.

The method may further comprise measuring additional weather parameters. This may further enhance the frost condition prediction, or may be used to detect further relevant weather situations (e.g. using an icing detector known as such).

In a further aspect, the present invention relates to a frost condition detection system, comprising a sensor module for determining a plurality of weather parameters (such as air temperature, relative humidity and dew-point temperature), a processing unit connected to the sensor module, the frost condition detection system further comprising a camera for providing local visual monitoring. The camera is e.g. directed with its field of view towards the site to be monitored, e.g. a nacelle and/or rotor of a wind turbine.

In an embodiment, the camera is a camera with an Ethernet interface, the processing unit being connected to an Ethernet interface, the system further comprising a data switch to which the camera and processing unit are connected, and a router connected to the data switch using a communication link, wherein the router allows connection of the frost condition detection system to a local or wide area network, such as the Internet. The communication link is e.g. a glass fiber cable running through the wind turbine tower.

In an even further embodiment, the frost condition detection system further comprising a (remotely controllable) lamp connected to the processing unit. This allows all-weather visual inspection in the vicinity of the camera, even at night.

The processing unit is arranged to execute the method according to any one of the method embodiments described above.

The frost condition detection system is connected to a wind turbine control system in a further embodiment, wherein the processing unit is arranged to shut down the wind turbine when a specific one of the one or more possible phases of frost conditions is entered.

The camera may be a pan, zoom, tilt (PZT) camera, allowing inspection of a wind turbine, or other turbines in its vicinity.

In an even further embodiment, the frost condition detection system further comprises a mounting frame for mounting sensor parts of the sensor module and the camera on top of a wind turbine. The mounting frame is provided with a lightning protection element in the vicinity of the sensor parts in an even further embodiment, e.g. using a conducting rod in semi-spherical shape.

### Short description of drawings

The present invention will be discussed in more detail below, using a number of exemplary embodiments, with reference to the attached drawings, in which
Fig. 1 shows a schematic diagram of a frost condition detection system according to an embodiment of the present invention;
Fig. 2 shows a side view of a mounting frame for parts of the frost condition detection system as shown in Fig. 1.

### Detailed description of exemplary embodiments

Frost is the solid deposition of water vapour from saturated air. It is formed when solid surfaces are cooled to below the dew point of the adjacent air as well as below the freezing point of water. Frost crystals' size differ depending on time and water vapour available. If a solid surface is chilled below the dew point of the surrounding air and the surface itself is colder than freezing, frost will form on the surface. Frost consists of spicules of ice which grow out from the solid surface. The size of the crystals depends on time, temperature, and the amount of water vapour available. In general, for frost to form the deposition surface must be colder than the surrounding air. Frost may have different forms, such as hoar frost, white frost or rime.

Frost (or glazed frost) is different from the formation of icing, which occurs when water in fluid form (rain) changes to ice when e.g. hitting a cold surface. The fluid form of water may be under-cooled, i.e. at a temperature below 0°C.

Especially in relation to wind turbines, the effects and dangers of icing and frost differ. In icing conditions, the wind turbine will get covered in a layer of ice, including the turbine blades. In known systems such an icing condition is detected using an icing sensor, and the blades are (automatically) stopped from rotating to prevent bits and pieces of ice from flying around. In frosting conditions the wind turbine may get covered with a layer of rime, which in itself is not creating any dangerous situations. However, keeping the wind turbine rotating for prolonged periods in such conditions (fog or low level clouds) would allow for growth of ice or frost depositions (especially on the moving rotor blades), slowly increasing the risk of ice falling from the blades. Also in this case, the wind turbine may have to be stopped for a longer period for waiting for melting of the ice, resulting in loss of electricity production.

When using an icing sensor (which would stop the wind turbine automatically), the time of halting is rather unpredictable, and may be too early (resulting in production loss) or too late (resulting in danger of ice build up and shedding). Continuous monitoring by a human operator is also not viable in view of cost.

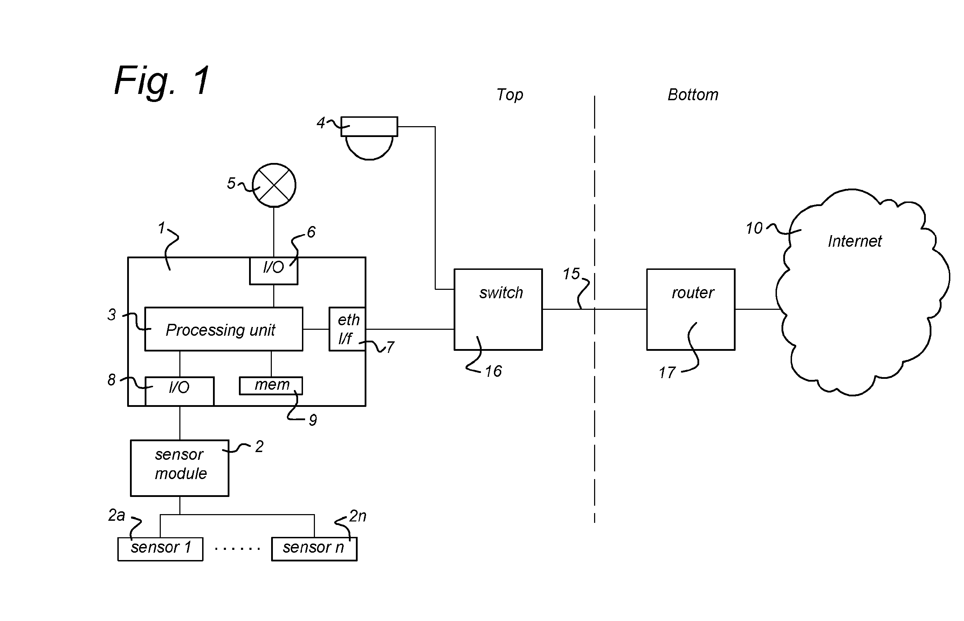

In Fig. 1 a schematic diagram is shown of a frost condition detection system according to an embodiment of the present invention. The frost condition detection system comprises in general wordings a sensor module 2 for determining a plurality of weather parameters (such as air temperature, relative humidity and dew-point temperature), a processing unit 3 connected to the sensor module 2, and a camera 4 for providing local visual monitoring.

The system is built around a processing unit 3, which is connected to a number of peripheral elements, such as a memory 9, a sensor input/output interface 8, a light interface 6 and an Ethernet interface 7. These elements 3, 6-9 in combination form an active remote i/o Ethernet server 1, which is the central unit of the frost condition detection system.

A sensor module 2 is connected to the processing unit 3, in the embodiments as drawn via the sensor input/output interface 8, using analogue outputs. The sensor module 2 is connected to one or more sensors 2a...2n, comprising e.g. one or more temperature sensors, relative humidity sensors, etc. The sensor module 2 in one embodiment is a smart sensor module 2 provided with its own processing power, which e.g. allows to determine the dew point temperature from the data provided by the one or more sensors 2a...2n. Also, it may be provided with an Ethernet interface, allowing control, data logging and programming from a remote location.

The sensor module 2 is in one embodiment arranged to determine three local parameters, i.e. temperature of the ambient air, and relative humidity/dew point temperature, using two or more sensors 2a...2n. Optionally, also the temperature of the rotor blade is determined.

The sensor module 2 in one embodiment is arranged to log the measured parameter values (at regular intervals). Alternatively, the processing unit 3 is arranged to log these measured parameter values, e.g. by an OPC-server (OLE for Process Control).

The Ethernet interface 7 allows to connect the processing unit 3 to the Internet 10 or another dedicated local or wide area network, using a switch 16, a connecting link 15 and a router 17. The switch 16 and router 17 may also be implemented as units with combined functionality, e.g. a router in combination with a switch.

As shown in the embodiment of Fig. 1, a camera 4 is provided as part of the frost detection system. The camera 4 is e.g. an IP based camera, allowing local connection to the switch 16, and transfer of (video) data to a remote location. The video data captured by the camera 4 allows to observe critical local circumstances for the wind turbine, such as fog or low level clouds, rain, icing or snow, and formation of rime (frost). In a specific embodiment, the camera 4 is a dome network camera, as regularly used in video monitoring systems. It is even possible to have the power supply for the camera 4 over the same cable as the video data (e.g. using a single UTP cable).

The connection link 15 is used to allow positioning of the measuring and processing equipment in the top part (e.g. nacelle) of a wind turbine, while having an Internet connection in the bottom part (basement or server room) of the wind turbine. The connection link 15 can be any available Ethernet connection, using UTP cable or glass fiber.

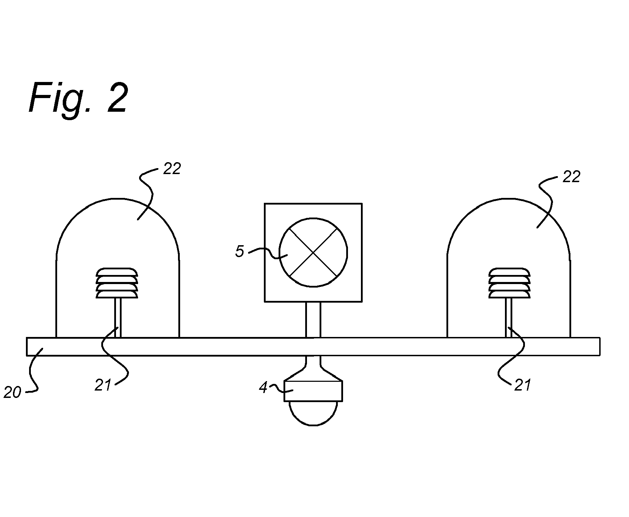

Fig. 2 shows an embodiment of the positioning and fixation of external elements of the frost condition detection system, which can be used to mount these elements on a wind turbine, e.g. on top of a nacelle of a wind turbine.

A mounting frame 20 is provided, which can easily be attached to already existing structure on top of the wind turbine. In the embodiment shown, two sensor units 21 are attached to the mounting frame 20, wherein the one or more sensors 2a...2n are accommodated in the sensor units 21 (radiation shield). Furthermore, the lamp 5 is mounted on top of the mounting frame 20, while the camera 4 is mounted below the mounting frame 20. The lamp 5 allows to use the camera 4 also during night or low ambient light conditions.

In the embodiment shown, the mounting frame 20 is furthermore provided with two (optional) lightning protection elements 22. The lightning protection elements 22 are attached to the mounting frame 20 in the vicinity of one or more sensor units 21, and are e.g. implemented as an electrically conducting rod with a semi-spherical shape.

The active remote i/o Ethernet server 1 has a server functionality with a number of analog signal inputs, and a number of digital inputs and outputs for controlling various peripheral equipment. The server 1 can be remotely accessed via Internet, and can be programmed, stored data can be retrieved (e.g. for analysis purposes), and peripherals can be controlled. The sensor input/output interface 8 allows to convert the analog signal outputs from the sensor module 2 to digital values.

The processing unit 3 of the frost condition detection system can thus be controlled remotely using the Internet connection. A software program, e.g. stored in the memory 9, is executed to provide the desired functionality to the active remote i/o Ethernet server 1. Threshold values for various parameters related to actual measurements from the sensors 2a...2n can be set, as well as associated actions. De precieze implementatie lijkt uit octrooitechnisch zichtpunt niet relevant. A correct interpretation of the sensor parameters as determined by the processing unit 3 allows to properly determine the critical moment when frost conditions occur. The processing unit 3 may then be programmed to monitor the critical moment by checking the related parameters. Warnings may be generated in e.g. four phases, each with a higher level of criticality. In all critical phases, the processing unit may be programmed to directly shut down the wind turbine, e.g. using hard-wired outputs. Restart of a wind turbine can also be programmed, but will always require manual intervention as a visual inspection is needed to determine that no ice has built up at all during the frost condition.

The associated actions e.g. comprise the sending of an email message to a predetermined email address in case an alarm situation is detected, e.g. when one or more parameters cross a threshold value. The email can be programmed to make use of regular internet protocol capabilities, e.g. using a hyperlink to access the (live) video data from camera 4, or a hyperlink to switch the lamp 5.

Furthermore, the processing unit 3 can be arranged to control the camera 4 and associated lamp 5. The camera 4 is e.g. a camera allowing pan, tilt and zoom (PZT) control, to allow inspection of the wind turbine on which the frost condition detection system is mounted, or even inspection of neighboring wind turbines. The lamp 5 can be controlled from a remote location (e.g. on, automatically off after 10 minutes), e.g. in order to inspect local circumstances even when it is dark outside. The dome camera 4 can be programmed with predetermined video capture settings to allow a continuous inspection on and around the wind turbine where the camera 4 is located. Also, it is possible to take digital photographs manually.

In an even further embodiment, an existing ice detections sensor may be added to the frost condition detection system. When interfaced with the processing unit 3, it would be possible to integrate regular ice detection into the frost condition detection system.

The present invention embodiments as described above will allow to minimize the risk of ice building up and falling from a wind turbine, thereby increasing safety of operation (and acceptance and trust by people in direct surroundings). Increasing safety of operation may have further benefits, such as a higher willingness to expand a wind turbine farm. More important is that the present invention embodiments allow to have a higher degree of safe use, minimizing economical loss due to unnecessary stop of the wind turbine.

The present invention embodiments have been described above with reference to a number of exemplary embodiments as shown in the drawings. Modifications and alternative implementations of some parts or elements are possible, and are included in the scope of protection as defined in the appended claims.

## Claims

1. Method for detecting frost conditions at a monitoring site, such as a wind turbine location, comprising
determining a plurality of weather parameters locally at the monitoring site, the plurality of weather parameters comprising at least air temperature, relative humidity and dew-point temperature,
determining critical threshold values of each of the weather parameters for one or more possible phases of frost conditions,
sending a warning message comprising an indication of the determined phase of possible frost conditions, and
allowing remote visual monitoring.

2. Method according to claim 1, further comprising
determining re-entry in a non-frost condition, and upon such determination sending a further message comprising an indication of the non-frost condition.

3. Method according to claim 1 or 2, wherein the warning message comprises a trigger link, and the method further comprises controlling a camera (4) which is mounted at the monitoring site to allow the visual monitoring, upon reception of an actuation of the trigger link.

4. Method according to claim 1, 2 or 3, further comprising shutting down a device at the monitoring site in response to entering a specific one of the one or more possible phases of frost conditions.

5. Method according to any one of claims 1-4, further comprising measuring additional weather parameters.

6. Frost condition detection system, comprising
a sensor module (2) for determining a plurality of weather parameters,
a processing unit (3) connected to the sensor module,
the frost condition detection system further comprising a camera (4) for providing local visual monitoring.

7. Frost condition detection system according to claim 6, wherein the camera (4) is a camera with an Ethernet interface,
the processing unit (3) being connected to an Ethernet interface (7),
the system further comprising a data switch (16) to which the camera (4) and processing unit (3) are connected, and a router (17) connected to the data switch (16) using a communication link (15),
wherein the router (17) allows connection of the frost condition detection system to a local or wide area network (10).

8. Frost condition detection system according to claim 6 or 7, further comprising a lamp (5) connected to the processing unit (3).

9. Frost condition detection system according to any one of claims 6-8, wherein the processing unit (3) is arranged to execute the method according to any one of claims 1-5.

10. Frost condition detection system according to any one of claims 6-9, wherein the frost condition detection system is connected to a wind turbine control system, the processing unit being arranged to shut down the wind turbine when a specific one of the one or more possible phases of frost conditions is entered.

11. Frost condition detection system according to any one of claims 6-10, wherein the camera (4) is a pan, zoom, tilt (PZT) camera.

12. Frost condition detection system according to any one of claims 6-11,
further comprising a mounting frame (20) for mounting sensor parts (21) of the sensor module (2) and the camera (4) on top of a wind turbine.

13. Frost condition monitoring system according to claim 12, wherein the mounting frame (20) is provided with a lightning protection element (22) in the vicinity of the sensor parts (21).
